# EUROPÄISCHE PATENTSCHRIFT

(11) **EP 1 912 008 B1**
(45) Veröffentlichungstag und Bekanntmachung des Hinweises auf die Patenterteilung: **01.03.2017**
(21) Anmeldenummer: 07018886.7
(22) Anmeldetag: 26.09.2007
(51) Int. Cl.: F16L 33/08

(54) **Schlauchschelle**
Hose clip
Collier de serrage

(30) Priorität: 12.10.2006 DE 102006048336
(43) Veröffentlichungstag der Anmeldung: 16.04.2008
(73) Patentinhaber: NORMA Germany GmbH, 63477 Maintal (DE)
(72) Erfinder: Krauss, Mathias, 61130 Nidderau (DE); Mann, Stephan, 63599 Bieber (DE); Röder, Gunter, 34346 Hann.Münden (DE); Krieger, Ewald, 38528 Adenbüttel (DE)
(74) Vertreter: Patentanwälte Olbricht Buchhold Keulertz

(56) Entgegenhaltungen:
- EP-A1- 1 445 526
- WO-A1-2004/044474
- DE-C1- 4 127 017
- DE-U1-202005 011 542
- US-A- 3 407 448
- US-A- 3 454 996
- US-A- 3 477 106

## Beschreibung

Die Erfindung betrifft eine Schlauchschelle mit einem Schellenband, einer Spanneinrichtung und einer Positionieranordnung zum Positionieren der Schlauchschelle auf einem Schlauch, wobei die Positionieranordnung mindestens zwei Positionierer aufweist.

Eine derartige Schlauchschelle ist jeweils aus den Dokumenten US 3 407 448 A, US 3 477 106 A, US 3 454 996 A und EP 1 445 526 A1 bekannt.

Eine weitere Schlauchschelle ist aus WO 2004/044474 A1 bekannt. Die Positionieranordnung weist einen Positionierer auf, der am Schellenband befestigt oder einstückig damit ausgebildet ist. Der Positionierer weist dabei zwei klammerartige Ausformungen auf, die in die Umfangswand eines Schlauchs eingedrückt werden können.

Eine Schlauchschelle dient in erster Linie dazu, das Ende eines Schlauchs auf einem Stutzen zu befestigen. Der Schlauch wird dabei auf den Stutzen aufgeschoben und die Schlauchschelle, die zweckmäßigerweise vor dem Aufschieben des Schlauchs auf den Stutzen auf dem Schlauch montiert worden ist, wird gespannt, indem die Spanneinrichtung betätigt wird. Dieser Vorgang muß bei der Herstellung eines Automobils relativ häufig wiederholt werden.

Das Spannen der Schlauchschelle erfordert in der Regel das Ansetzen eines Werkzeugs. Hierbei ist es günstig, wenn die Spanneinrichtung in einer bestimmten Position angeordnet ist. Um diese Position sicherzustellen, ist die Positionieranordnung vorgesehen, mit der die Schlauchschelle in einer vorbestimmten Winkellage auf dem Umfang des Schlauchs festgehalten werden kann.

Die Verwendung einer derartigen Positionieranordnung hat zwar bereits zu einer gewissen Arbeitserleichterung bei der Befestigung eines Schlauchs an einem Stutzen geführt. Dennoch ist immer noch eine gewisse Geschicklichkeit erforderlich, um die Spanneinrichtung zu betätigen.

Der Erfindung liegt die Aufgabe zugrunde, die Montage eines Schlauchs zu vereinfachen.

Diese Aufgabe wird bei einer Schlauchschelle der eingangs genannten Art dadurch gelöst, dass von den Positionierern einer in Umfangsrichtung ortsfest am Schellenband befestigt ist und der mindestens eine weitere Positionierer relativ zum Schellenband in Umfangsrichtung bewegbar ist und der bewegliche Positionierer an einer Blechbrücke angeordnet ist, die im Inneren des Schellenbandes angeordnet ist, wobei die Blechbrücke als Feder ausgebildet ist.

Mit zwei Positionierern läßt sich nicht nur die Winkellage der Schlauchschelle und damit die Position der Spanneinrichtung in Umfangsrichtung auf dem Schlauch festlegen. Man kann mit einer größeren Sicherheit auch die Winkellage einstellen, die das Schellenband zur Umfangsrichtung des Schlauches einnimmt. Dadurch wird ein Kippen der Schlauchschelle gegenüber dem Schlauch verringert oder sogar vermieden, so daß ein "schiefes" Zuziehen der Schlauchschelle vermieden werden kann. Der Werker, der den Schlauch mit der Schlauchschelle auf den Stutzen montiert, muß weniger Sorgfalt aufwenden, um die Schlauchschelle in der gewünschten Weise festzuziehen. Eine ungleichförmige axiale Verformung des Materials des Schlauchs kann vermieden oder verringert werden.

Vorzugsweise weisen zwei Positionierer einen Abstand in Umfangsrichtung von mindestens 120° auf. Bei einem derartigen Winkelabstand ist das Risiko, daß das Schellenband gegenüber der Umfangsrichtung des Schlauches kippt, relativ klein.

Bevorzugterweise sind bei mindestens einem Positionierer in Umfangsrichtung beidseitig Axialanschläge angeordnet. Damit kann man das Kippen der Schlauchschelle gegenüber der Umfangsrichtung des Schlauchs in nahezu allen Richtungen zuverlässig verhindern.

Erfingdungsgemäß ist von den Positionierern einer in Umfangsrichtung ortsfest am Schellenband befestigt und der mindestens eine weitere Positionierer ist relativ zum Schellenband in Umfangsrichtung bewegbar. Die Schlauchschelle weist also einen festen und einen schwimmend gelagerten Positionierer auf. Damit kann man erreichen, daß der schwimmend gelagerte Positionierer beim Spannen des Schellenbandes ortsfest am Schlauch bleiben kann, auch wenn sich der Innendurchmesser des Schellenbandes verringert. In dem Maß, wie sich der Innendurchmesser des Schellenbandes verringert, wandert der schwimmend gelagerte Positionierer relativ zum Schellenband.

Erfindungsgemäß ist der bewegliche Positionierer an einer Blechbrücke angeordnet, die im Inneren des Schellenbandes angeordnet ist. Die Blechbrücke hat mehrere Vorteile. Zum einen stützt sie den Positionierer in Umfangsrichtung an zwei Positionen gegenüber dem Schellenband ab, so daß man auch dann, wenn der Positionierer noch nicht unmittelbar am Schellenband angeordnet ist, ein Kippen des Schellenbandes zur Umfangsrichtung des Schlauchs vermeiden kann. Zum anderen kann man dafür sorgen, daß der Positionierer sozusagen von Anfang an lagerichtig am Schlauch montiert werden kann, weil der Positionierer durchaus einen gewissen Abstand zum Schellenband im ungespannten Zustand haben kann.

Erfindungsgemäß ist die Blechbrücke als Feder ausgebildet. Dies unterstützt bei der Demontage der Schlauchschelle das Aufspreizen der Schlauchschelle. Vorzugsweise ist der bewegliche Positionierer einteilig mit der Blechbrücke ausgebildet. Dies vereinfacht die Fertigung. Man kann beispielsweise den Positionierer und die Blechbrücke als gemeinsames Teil ausstanzen. Vorzugsweise ist die Blechbrücke im Bereich der Spanneinrichtung angeordnet. Damit kann man die Blechbrücke für einen weiteren Zweck verwenden, nämlich für das Abdecken des Materialsprungs im Bereich der Spanneinrichtung. Die beiden Enden des Schellenbandes müssen sich überlappen, wobei das innere Ende beim Spannen des Schellenbandes auf der Umfangsfläche des Schlauchs verschoben wird. Wenn man nun die Blechbrücke in diesem Bereich anordnet, dann wird das innere Ende beim Spannen des Schellenbandes nicht unmittelbar auf dem Material des Schlauchs verschoben, sondern kann auf der Außenseite der Blechbrücke wandern. Die Gefahr, daß der Schlauch durch das Spannen beschädigt wird, wird also klein gehalten.

Auch ist von Vorteil, daß die Schlauchschelle ein Nennmaß aufweist und ein Abstand zwischen der Blechbrücke und einem diametral gegenüberliegenden Abschnitt des Schellenbandes kleiner ist als das Nennmaß. Mit dieser Ausgestaltung wird erreicht, daß die Schlauchschelle bereits im ungespannten Zustand der Spanneinrichtung mit einer gewissen Vorspannung auf dem Umfang des Schlauches gehalten ist. Der Schlauch wird sozusagen zwischen der Blechbrücke und dem diametral gegenüberliegenden Bereich des Schellenbandes eingespannt. Die hierbei auftretenden Spannkräfte müssen nicht groß sein. Sie sollten lediglich für eine "Vorpositionierung" der Schelle ausreichen.

Die Erfindung wird im folgenden anhand eines bevorzugten Ausführungsbeispiels in Verbindung mit der Zeichnung beschrieben. Hierin zeigen:
- Fig. 1: eine Vorderansicht einer Schlauchschelle,
- Fig. 2: die Schlauchschelle in perspektivischer Darstellung,
- Fig. 3: die Schlauchschelle auf einem Schlauch montiert und

- Fig. 4: die Schlauchschelle auf dem Schlauch aus einem anderen Blickwinkel.

Eine Schlauchschelle 1 weist ein Schellenband 2 auf, dessen Enden so übereinandergelegt sind, daß sich ein inneres Ende 3 und ein äußeres Ende 4 ergibt. Die beiden Enden 3, 4 sind durch eine Spanneinrichtung 5 miteinander verbunden. Die Spanneinrichtung 5 ist fest mit dem inneren Ende 3 des Schellenbandes verbunden und weist eine Spannschraube 6 auf, die mit einer Gewindeprägung 7 auf der Außenseite des äußeren Endes 4 des Schellenbandes in Eingriff steht. Durch Verdrehen der Spannschraube wird das äußere Ende 4 in Umfangsrichtung gegenüber dem inneren Ende 3 des Schellenbandes 2 verlagert.

Der Spanneinrichtung 5 diametral gegenüberliegend angeordnet ist ein erster Positionierer 8, der fest mit dem Schellenband 2 verbunden ist. Er kann mit dem Schellenband 2 beispielsweise verschweißt, verlötet oder verklebt sein oder durch Clinchen oder Prägen mit dem Schellenband 2 verbunden sein. Es ist auch möglich, den ersten Positionierer 8 einstückig mit dem Schellenband 2 auszubilden.

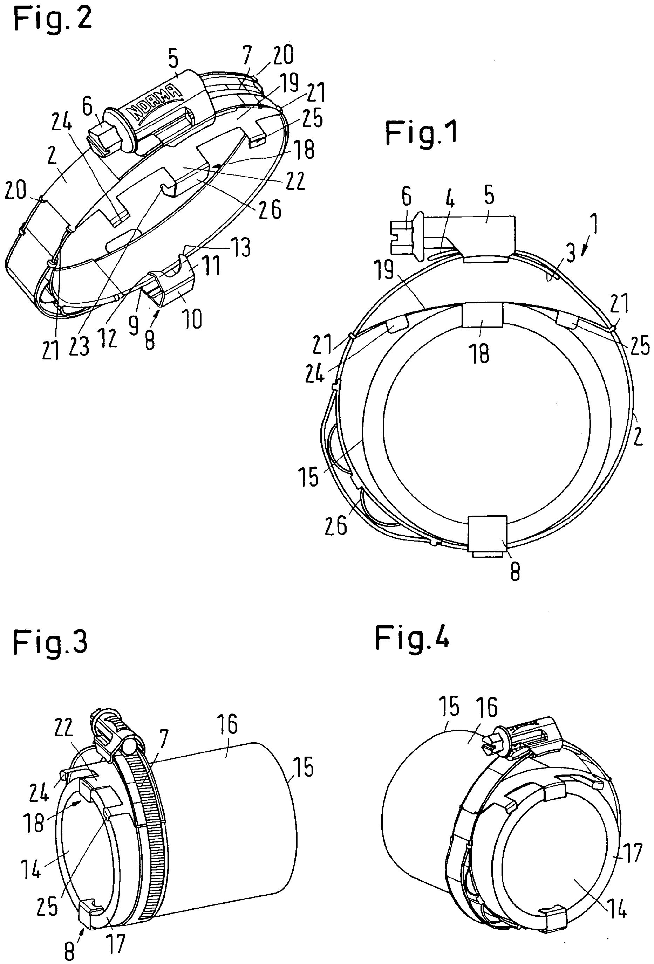

Wie insbesondere aus den Fig. 2 bis 4 zu erkennen ist, weist der erste Positionierer 8 einen quer zur Umfangsrichtung des Schellenbandes 2 verlaufenden Befestigungsabschnitt 9 auf, der in Axialrichtung des Schellenbandes 2 um eine vorbestimmte Strecke über das Schellenband 2 übersteht. Am überstehenden Ende ist der Befestigungsabschnitt 9 U-förmig umgebogen, so daß eine Basis 10 und ein Schenkel 11 gebildet ist. Der Schenkel 11 trägt zwei Spitzen 12, 13, die sich in die Innenwand 14 eines Schlauches 15 etwas eingraben können, auf dessen Umfangswand 16 die Schlauchschelle montiert ist. Der Überstand des Befestigungsabschnitts 9 definiert dabei einen axialen Abstand, den die Schlauchschelle 1 zur Stirnseite 17 des Schlauchs 15 einnimmt.

Ein zweiter Positionierer 18 ist dem ersten Positionierer 8 diametral gegenüberliegend angeordnet. Er ist einteilig mit einer Blechbrücke 19 ausgebildet, die am Schellenband 2 schwimmend gelagert ist. Mit anderen Worten weist die Blechbrücke 19 an ihren beiden Enden jeweils ein Paar umgebogener Laschen 20, 21 auf, die das Schellenband 2 so umgreifen, daß die Blechbrücke 19 gegenüber dem Schellenband 2 verschoben werden kann.

Die Blechbrücke ist aus einem federnden Material gebildet, vorzugsweise Federstahl. Sie weist zu einem diametral gegenüberliegenden Abschnitt des Schellenbandes 2, also zu einem Abschnitt, wo der erste Positionierer 8 angeordnet ist, einen Abstand auf, der geringer ist als der Durchmesser des Schlauchs 15, für den die Schlauchschelle 1 vorgesehen ist. Im ungespannten Zustand ist die Blechbrücke 19 dann bereits etwas ausgebogen, so daß die Blechbrücke 19 im Bereich des zweiten Positionierers 18 mit einer gewissen Spannung am Umfang des Schlauchs 15 anliegt.

Die Blechbrücke 19 weist einen axialen Vorsprung 22 auf, dessen axiale Länge etwa der Länge des Überstandes des Befestigungsabschnitts 9 des ersten Positionierers entspricht. Am axialen Ende des Vorsprunges 22 ist der zweite Positionierer 18 U-förmig umgebogen, so daß wiederum zwei Spitzen 23 (nur eine ist in Fig. 2 sichtbar) gebildet sind, die sich in der Innenwand 14 des Schlauchs 15 festkrallen können.

Die Blechbrücke 19 weist in Umfangsrichtung beidseits des zweiten Positionierers 18 jeweils einen Axialanschlag 24, 25 auf, der mit der Stirnseite 17 des Schlauchs 15 zusammenwirkt, wenn die Schlauchschelle 1 montiert ist. Die beiden Axialanschläge 24, 25 haben in Axialrichtung die gleiche Entfernung zur Blechbrücke 19 wie die Basis 26 des U des zweiten Positionierers 18. An der gleichen axialen Position ist auch die Basis 10 des ersten Positionierers 8 angeordnet, so daß sich die Schlauchschelle 1 dann, wenn sie auf den Umfang des Schlauchs 15 aufgeschoben worden ist, an insgesamt vier Positionen an der Stirnseite 17 des Schlauchs 15 abstützen kann. Damit wird ein Kippen der Schlauchschelle 1 gegenüber der Umfangsrichtung des Schlauches 15 wirkungsvoll vermieden.

Die Spitzen 12, 13 bzw. 23 verhindern gleichzeitig ein Verdrehen der Schlauchschelle 1 auf dem Umfang des Schlauchs 15, so daß die vormontierte Schlauchschelle 1 bis zum Festspannen der Schlauchschelle 1 auf dem Schlauch 15 in ihrer einmal eingenommenen Position verbleibt.

Die Federbrücke 19 ist in Umfangsrichtung in dem Bereich angeordnet, wo sich auch die Spanneinrichtung 5 befindet. Beim Spannen bewegt sich das innere Ende 3 gegenüber dem äußeren Ende 4 des Schellenbandes 2. Diese Bewegung wird von der Umfangswand 16 des Schlauchs 15 ferngehalten, weil das innere Ende 3 auf der äußeren Oberfläche der Blechbrücke 19 gleitet, wenn die Schlauchschelle 1 gespannt wird.

Eine Bewegung der beiden Enden 3, 4 des Schellenbandes 2 ist trotz des zweiten Positionierers 18 möglich, weil die Blechbrücke 19 schwimmend am Schellenband 2 gelagert ist. Das Schellenband 2 kann sich also gegenüber der Blechbrücke 19 bewegen.

Zusätzlich ist an der Innenseite des Schellenbandes 2 noch eine Federeinrichtung 26 angeordnet, die die Schlauchschelle auch dann gespannt hält, wenn aufgrund einer thermisch bedingten Durchmesseränderung die Spannkraft der Schlauchschelle 1 ansonsten nachlassen würde. Eine derartige Federanordnung an sich ist bereits aus DE 41 27 017 C1 bekannt.

Die Blechbrücke 19 legt sich beim Spannen der Schlauchschelle 1 um den Umfang des Schlauchs 15. Da sie aus einem federnden Material gebildet ist, unterstützt sie beim Lösen der Spanneinrichtung 5 das Aufspreizen des Schellenbandes 2, so daß die Demontage des Schlauchs 15 von einem Stutzen erleichtert wird.

Die beiden Positionierer 8, 18 sind mit Spitzen 12, 13 bzw. 23 dargestellt. Natürlich ist es auch möglich, Positionierer einer anderen Art zu verwenden.

## Patentansprüche

1. Schlauchschelle (1) mit einem Schellenband (2), einer Spanneinrichtung (5) und einer Positionieranordnung zum Positionieren der Schlauchschelle auf einem Schlauch (15), wobei die Positionieranordnung mindestens zwei Positionierer (8, 18) aufweist, **dadurch gekennzeichnet, dass** von den Positionierern (8, 18) einer in Umfangsrichtung ortsfest am Schellenband (2) befestigt ist und der mindestens eine weitere Positionierer (18) relativ zum Schellenband (2) in Umfangsrichtung bewegbar ist und der bewegliche Positionierer (18) an einer Blechbrücke (19) angeordnet ist, die im Inneren des Schellenbandes (2) angeordnet ist, wobei die Blechbrücke (19) als Feder ausgebildet ist.

2. Schlauchschelle (1) nach Anspruch 1, **dadurch gekennzeichnet, dass** zwei Positionierer (8, 18) einen Abstand in Umfangsrichtung von mindestens 120° aufweisen.

3. Schlauchschelle (1) nach Anspruch 1 oder 2, **dadurch gekennzeichnet, dass** bei mindestens einem Positionierer (18) in Umfangsrichtung beidseitig Axialanschläge (24, 25) angeordnet sind.

4. Schlauchschelle (1) nach einem der vorhergehenden Ansprüche, **dadurch gekennzeichnet, dass** der bewegliche Positionierer (18) einteilig mit der Blechbrücke (19) ausgebildet ist.

5. Schlauchschelle (1) nach einem der vorhergehenden Ansprüche, **dadurch gekennzeichnet, dass** die Blechbrücke (19) im Bereich der Spanneinrichtung (5) angeordnet ist.

6. Schlauchschelle (1) nach einem der vorhergehenden Ansprüche, **dadurch gekennzeichnet, dass** die Schlauchschelle (1) ein Nennmaß aufweist und ein Abstand zwischen der Blechbrücke (19) und einem diametral gegenüberliegenden Abschnitt des Schellenbandes (2) kleiner ist als das Nennmaß.

7. Schlauchschelle (1) nach einem der vorhergehenden Ansprüche, **dadurch gekennzeichnet, dass** auf der Innenseite des Schellenbandes (2) eine Federeinrichtung (26) angeordnet ist.

## Claims

1. Hose clamp (1) with a clamping band (2), a clamping device (5) and a positioning arrangement for positioning the hose clamp on a hose (15), wherein the positioning arrangement comprises at least two positioners (8, 18), **characterized in that** one of the positioners (8, 18) is fixedly mounted in a circumferential direction on the clamping band (2) and the at least one further positioner (18) is movable in the circumferential direction relative to the clamping band (2) and the movable positioner (18) is arranged on a sheet metal bridge (19) which is arranged inside the clamping band (2), wherein the sheet metal bridge (19) is configured as a spring.

2. Hose clamp (1) according to claim 1, **characterized in that** two positioners (8, 18) are arranged at a distance from each other in the circumferential direction of at least 120°.

3. Hose clamp (1) according to claim 1 or 2, **characterized in that** axial stops (24, 25) are arranged in the circumferential direction on both sides of at least one positioner (18).

4. Hose clamp (1) according to any of the preceding claims, **characterized in that** the moveable positioner (18) is constructed integrally with the sheet metal bridge (19).

5. Hose clamp (1) according to any of the preceding claims, **characterized in that** the sheet metal bridge (19) is arranged in the area of the clamping device (5).

6. Hose clamp (1) according to any of the preceding claims, **characterized in that** the hose clamp (1) has a nominal dimension, and a distance between the sheet metal bridge (19) and a diametrically oppositely located section of the clamping band (2) is smaller than the nominal dimension.

7. Hose clamp (1) according to any of the preceding claims, **characterized in that** a spring device (26) is arranged on the inside of the clamping band (2).

## Revendications

1. Collier de serrage (1) avec une bride (2), un dispositif de serrage (5) et un dispositif de positionnement pour positionner le collier de serrage sur un tuyau (15), le dispositif de positionnement comportant au moins deux positionneurs (8, 18), **caractérisé en ce que**, parmi les positionneurs (8, 18), l'un est fixé à la bride (2) de manière à ne pas pouvoir bouger en direction circonférentielle et l'au moins un autre positionneur (18) est mobile en direction circonférentielle par rapport à la bride (2) et le positionneur mobile (18) est agencé sur un pont en tôle (19) qui est agencé à l'intérieur de la bride (2), le pont en tôle (19) étant conçu comme un ressort.

2. Collier de serrage (1) selon la revendication 1, **caractérisé en ce que** deux positionneurs (8, 18) sont à une distance d'au moins 120° en direction circonférentielle.

3. Collier de serrage (1) selon la revendication 1 ou 2, **caractérisé en ce que**, dans le cas d'au moins un positionneur (18), des butées axiales (24, 25) sont agencées des deux côtés en direction circonférentielle.

4. Collier de serrage (1) selon l'une des revendications précédentes, **caractérisé en ce que** le positionneur mobile (18) est conçu d'une seule pièce avec le pont en tôle (19).

5. Collier de serrage (1) selon l'une des revendications précédentes, **caractérisé en ce que** le pont en tôle (19) est agencé dans la zone du dispositif de serrage (5).

6. Collier de serrage (1) selon l'une des revendications précédentes, **caractérisé en ce que** le collier de serrage (1) a une dimension nominale et **en ce que** la distance entre le pont en tôle (19) et un tronçon diamétralement opposé de la bride (2) est inférieure à la dimension nominale.

7. Collier de serrage (1) selon l'une des revendications précédentes, **caractérisé en ce qu'**un dispositif formant ressort (26) est agencé sur le côté intérieur de la bride (2).
